# EUROPEAN PATENT APPLICATION

(11) **EP 3 862 158 A1**
(43) Date of publication of application: **11.08.2021**
(21) Application number: 20155530.7
(22) Date of filing: 05.02.2020
(51) Int. Cl.: B29B 15/12

(54) **DEVICES AND METHODS FOR MAKING UNCURED, NEAR-NET SHAPE PLIES**

(71) Applicant: Cytec Industries Inc., Princeton, NJ 08540 (US)
(72) Inventor: POYNTON, Gary, Nottingham, NG8 6DQ (GB); BLACKBURN, Robert, Hull, HU6 7JJ (GB)
(74) Representative: Lederer & Keller Patentanwälte Partnerschaft mbB

(57) **Abstract**

Disclosed herein are devices and methods for manufacturing uncured, near-net shape plies (150). Such devices include: a plurality of spools (100), each dispensing a dry tow (110); optionally, a plurality of spreaders (120) to spread the dry tows (110); optionally, a means to combine the dry tows (110) into a plurality of tapes or bundles; a plurality of feeders (130), each carrying a tow, tape or bundle, and adapted to maintain the tows, tapes or bundles in a parallel arrangement; a cutting apparatus(140) adapted to independently cut each individual tow, tape or bundle to a pre-determined length; optionally, a conveyor (170) adapted to transport the cut tows, tapes or bundles away from the cutting apparatus (140); an in-line resin infuser (190) adapted to impregnate the dry tows, tapes or bundles with resin material; and a receiver (160) for the cut tows, tapes or bundles, wherein the cut tows, tapes or bundles are impregnated and configured in the form of a near-net shape ply (150).

## Description

### Background

Fiber-reinforced resin composites, or "composite materials", are widely used as a strong, lightweight metal replacement in various applications, including in the automotive and aerospace fields. The process for making composite materials, beginning with resin and fiber and ending with a composite material part, is complex and can take many different routes. Each route provides for its own benefits, but also comes with fairly significant disadvantages.

For example, a majority of part manufacturing processes utilize prepreg, which is a continuous sheet or roll of resin-impregnated fiber or fiber-based textile. Prepregs are considered an industry standard because they are relatively simple to produce, typically using continuous lengths of fiber material in a hot melt process or a solvent dip process or using continuous lengths of fiber material impregnated by a hot melt resin or a solvated resin. Recently, material suppliers have focused on manufacturing rapid cure prepregs designed for part manufacture via compression molding (pressing). Compression molding prepreg is an advantageous means to manufacture parts because it combines the quality control of the combined fiber and resin with rapid manufacturing speeds realized via compression molding - a necessary combination needed for high volume production lines. While prepregs offer an end-user the certainty of resin content, individual plies must be cut from the sheet or roll, resulting in material waste - typically between 20 and 50 percent, even when the end-user carefully plans the cutting pattern of the prepreg. Moreover, prepreg is manufactured using consumable materials for satisfactory resin impregnation and protection of the final product. Such consumables also result in significant secondary waste and the costs associated therewith.

Another means for manufacturing composite material parts is high pressure resin transfer moulding (or HPRTM). HPRTM involves rapidly injecting a preformed stack of dry fiber plies, under heat and pressure in a matched die tool, with catalysed liquid resin. The catalysed resin system reacts and cures in the tool, thus forming the finished part. While it may be advantageous to have a part manufacturing process that removes the need for a preliminary stage of combining the fiber and the resin (prepreg), HPRTM still uses sheets or rolls of fiber material and thus - like using prepreg - also results in material waste. HPRTM also requires (a) a preliminary forming stage to create the dry fiber preform; (b) the inclusion of a binder material to hold the dry fiber preform in shape (typically a powder adhesive); (c) specialized moulding tools designed for resin injection; (d) liquid resin systems capable of reacting very quickly while exhibiting adequate fluid properties to permeate the dry fiber preform; and (e) safety considerations associated with working with large volumes of heated, highly reactive liquid.

Pre-impregnated fiber material can also be used in automated fiber placement (AFP) or automated tape laying (ATL) machines. AFP and ATL involve the automated placement of tows or tapes (pre-impregnated) to create either a flat blank or a three dimensional preform. The main difference between AFP and ATL is simply the width of the tow or tape being used. In AFP or ATL, a material deposition end effector is mounted to a multi-axis robot or gantry, from which tows or tapes are deposited on to a tool. The end effector can be moved and rotated such that material can be deposited at various locations and in various directions such as to create a multi-layer blank. While AFP or ATL can lead to significant efficiency with regard to material usage (typically greater than 90 percent), the processes (such as part manufacture from prepreg) still rely on an additional preliminary manufacturing stage to combine the fiber and resin. Furthermore AFP and ATL can be extremely slow, and use very expensive tools (robots, end effectors, gantry systems, etc.).

### Brief Summary

Each of the methods known in the art offers its own advantages but also comes with drawbacks. The present inventor has found a means for obtaining near-net shape plies, manufactured at comparable speeds to prepreg and with the high material utilization realized through automated fiber placement. Such near-net shape plies are appropriate for subsequent processing to create a flat blank suitable for compression moulding or other part manufacturing techniques.

Accordingly, in some aspects, the present teachings are directed to devices for the manufacture of uncured, near-net shape plies. Such devices generally include:
- a plurality of spools, each dispensing a dry tow;
- optionally, a plurality of spreaders to spread the dry tows;
- optionally, a means to combine the dry tows into a plurality of tapes or bundles;
- a plurality of feeders, each carrying a tow, tape or bundle, and adapted to maintain the tows, tapes or bundles in a parallel arrangement;
- a cutting apparatus adapted to independently cut each individual tow, tape or bundle to a pre-determined length;
- optionally, a conveyor adapted to transport the cut tows, tapes or bundles away from the cutting apparatus;
- an in-line resin infuser adapted to impregnate the dry tows, tapes or bundles with resin material; and
- a receiver for the cut tows, tapes or bundles, wherein the cut tows, tapes or bundles are impregnated and configured in the form of a near-net shape ply.

In some embodiments, the cutting apparatus includes one or more contact cutters, e.g., guillotine blades, one or more non-contact cutters, or both.

In some embodiments, the resin infuser is positioned to impregnate the dry tows before the feeders. In other embodiments, the resin infuser is positioned to impregnate the dry tows after the feeder, *e.g.,* after the cutting apparatus. In some embodiments, the resin infuser is at least one resin bath, slot die, printing tool, resin doser, pump or a combination thereof.

In some embodiments, the feeder is adapted to feed the near-net shape ply directly onto the receiver. In certain embodiments, the receiver is adapted to receive multiple plies at various orientations in a stacked arrangement. For example, the receiver may be rotatable and can travel in at least one axis. The receiver may be, for example, a rotating table. In other embodiments, the receiver includes a multi-axis robot equipped with an end effector adapted to pick up the near-net shape ply.

In certain embodiments, the devices also include a module adapted to modify the tows, tapes or bundles before cutting, or a module adapted to modify or otherwise process the near-net shape ply, for example wherein the module is a module adapted to alter the tack of the tow, tape or bundle before cutting or to alter the tack of the ply.

In other aspects, the present teachings are directed methods for the manufacture of an uncured, near-net shape ply. Such methods typically include:
- providing a plurality of dry tows via a plurality of spools;
- optionally, spreading each of the dry tows;
- optionally, combining the dry tows into a plurality of tapes or bundles;
- feeding the plurality of dry tows, tapes or bundles via a plurality of feeders to a cutting apparatus, wherein each feeder carries a tow, tape or bundle and the plurality of feeders maintain the tows, tapes or bundles in a parallel arrangement;
- independently cutting each individual tow, tape or bundle to a pre-determined length in the cutting apparatus; and
- impregnating the dry tows, tapes or bundles with resin material in an in-line resin infuser,
thereby providing an uncured, near-net shape ply.

In some embodiments, the cutting apparatus includes one or more contact cutters, e.g., guillotine blades, one or more non-contact cutters, or both.

In some embodiments, the resin infuser is positioned to impregnate the dry tows before the feeders. In some embodiments, the resin infuser is at least one resin bath, slot die, printing tool, resin doser, pump or a combination thereof.

### Brief Description of the Drawings

Fig 1 is a schematic representation of the side view of one embodiment of the disclosed device.
Fig 2 is a schematic representation of the top view of one embodiment of the disclosed device.
Fig 3 is a schematic representation of exemplary near net shape plies produced with the methods and devices of the present teachings.

### Detailed Description

One of the main considerations preventing an increased rate of adoption of composite materials in industries such as automotive and aerospace is the total cost of ownership (TCO) for a composite part. In recent times the TCO has been reduced through advancements in material and process development; namely cheaper materials, faster resin cure speeds and an increase in out-of-autoclave part manufacturing technologies - the latter two points leading to a reduced takt time.

As these technologies have matured, industries are looking for more ways to reduce the TCO. Three significant contributors to TCO are poor material utilization, slow rate of manufacture and length of the supply chain. For the successful industrialization of composite materials the industry needs to increase material utilization and rate of manufacture while simultaneously reducing the supply chain. The inventors have discovered a means for making an uncured, near-net shape plies, which addresses these three issues and more, all contributing to a reduced TCO for composite parts.

As used herein, the term "uncured" refers to a curing state of the resin material in a tow or ply which allows the formation of the ply into a three-dimensional form. The term uncured is intended to encompass thermoset materials that are fully uncured or at least partially uncured. Specifically, in some embodiments, the thermoset materials are partially cured to alter the tack of the tow and/or resulting ply. In such embodiments, the thermoset materials would not be cured to the point that they can no longer be formed into a three-dimensional part. The term uncured is also intended to encompass thermoplastic materials, which do not cure. In some embodiments, uncured tows or plies possess an amount of cure that allows ply-to-ply adhesion.

As used herein, the term "ply" refers to a layer of composite material (*i.e.,* fibers which have been pre-impregnated with resin material), or a section of a layer of composite material. The term "impregnated" or "pre-impregnated", as used herein, refers to the fact that the fibers in the composite material are fully or partially in contact with a resin material. A substantially planar ply would be considered "near-net shape" when moulding of the ply into its desired final three dimensional shape results in little or no waste of material. For example, in some embodiments, moulding of the near-net shape plies generated using the present teachings results in less than 20% by weight waste, less than 10% by weight waste or even less than 5% by weight waste, relative the total weight of the ply. The near-net shape of the ply is a shape that is pre-determined based on the shape of the desired final, three-dimensional product. The devices disclosed herein may, for example, be programmed to cut the tows, tapes or bundles to produce the pre-determined near-net shape. Because of the near-net shape of the ply, the devices and methods discussed herein exhibit high material utilisation and very low waste, comparable to an automated fiber placement process. At the same time, the devices and methods achieve high manufacturing rates, comparable to a prepreg manufacturing process.

The devices and methods of the present invention combine several value-adding steps into one machine thus reducing the supply chain. Without wishing to be bound by any particular theory, it is believed that this is because the present teachings include a continuous and linear production line with no heavy or slow moving parts and because the direct conversion of fiber and resin to plies significantly reduces the number of manufacturing stages and the supply chain. Thus, the present teachings provide methods and devices that can include all of the advantages exhibited by the art methods, with none of their apparent disadvantages. For example, by directly manufacturing plies having near net shape, the waste associated with prepreg or HPRTM can be avoided. The use of a static material deposition head for ply deposition also avoids issues seen in AFP and ATL with respect to linear rate of production. In addition, combining fiber and resin before creating a part (rather than using resin infusion) increases the rate of manufacture. Moreover, the end user can avoid handling liquid resin, and thus would not have any of the processing, design or safety concerns/constraints typically associated with HPRTM. Finally, the manufacture of discrete plies avoids challenges seen within-line tacking of the plies to one another as they are being deposited, as seen in AFP.

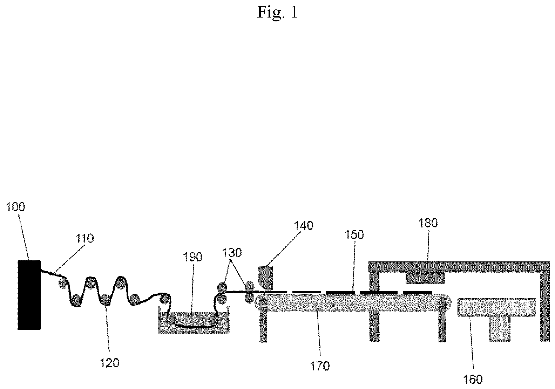

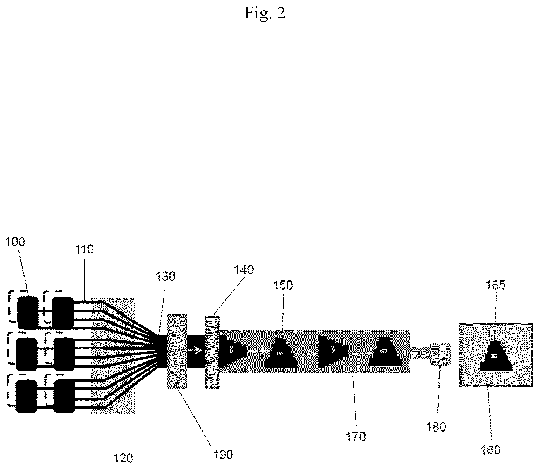

Referring now to Figures 1 and 2, which depict exemplary but varying embodiments; devices according to the present teachings include a plurality of spools (100), each dispensing a dry tow (110). As used herein, the term "spool" refers to a device, typically cylindrical, on which dry tows can be wound. Spools may also be referred to as reels, creels or bobbins. As used herein, the term "tow" refers to a collection of filaments. The filaments can be, but are not limited to, carbon fibers, glass fibers, aramid fibers or graphite fibers. Tows can be processed alone or in bundles (e.g., tapes), and also can be spread or otherwise flattened. In this regard, the devices according to the invention can optionally include means to combine individual tows into tapes or bundles and/or a plurality of tow spreaders (120). For the purpose of this disclosure, the term "tow" can also refer to tow bundles or tapes, particularly if the device includes a means to combine the tows into a tape or bundle and/or a tow spreader.

The tows, tapes or bundles then proceed to a plurality of feeders (130), each of which carries one tow, tape or bundle and which are adapted to maintain the tows, tapes or bundles in a parallel arrangement. The term "feeder" is intended to mean a device which delivers the individual tows, tapes or bundles to a cutting apparatus (140). The feeder can be, but is not limited to, a roller or set of rollers. The feeders can be adapted such that adjacent tows, tapes or bundles are in close physical proximity, or even in physical contact with, one another. For example, in some embodiments, the feeders are adapted to maintain the parallel edges of the tows, tapes or bundles at most about 5 mm from one another, *e.g.,* at most about 4mm, 3mm, 2mm or even 1mm or less from one another. The maximum distance between parallel edges of the tows will typically depend upon the end use of the ply.

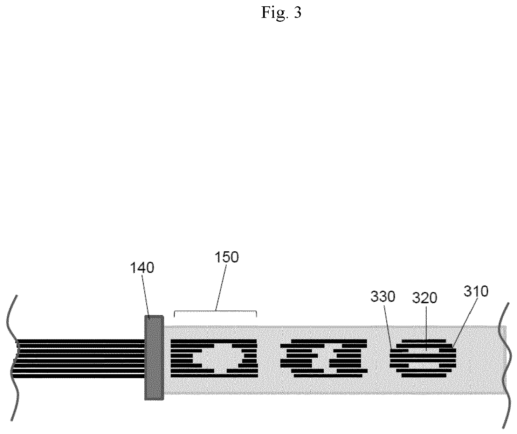

The cutting apparatus is adapted to independently cut individual tows, tapes or bundles, and may include multiple cutters. Thus, each individual tow, tape or bundle is individually fed and cut, such that each tow, tape or bundle can be included in a ply at a specific length, regardless of the length or presence of adjacent tows, tapes or bundles. Cutters may be contact cutters such as guillotine blades or non-contact cutters such as lasers. In one embodiment, the cutting apparatus is a plurality of contact cutters, e.g., guillotine blades. The tows emerge from the cutting apparatus in the form of a near-net shape ply (150). In certain embodiments, e.g., where a gap or hole in the ply is desired, the feeders and cutting apparatus can be adapted such that one or more of the tows, tapes or bundles can be discontinuously fed within the creation of a ply. In this regard, the tow, tape or bundle from a single spool may be used more than once for each layer. For example, referring to Figure 3, a tow, tape or bundle may proceed through the feeder for a first section (310), may be held to form a gap (320), then may again proceed through the feeder to form a second section (330).

The near-net shape ply then proceeds to a receiver (160). The term "receiver" refers to a means to capture the near-net shape ply, *e.g.,* for temporary storage, for further processing, for manual or automated transport to another place, or for any other contemplated use. The receiver can be adapted to receive multiple plies at various orientations in a stacked arrangement (165). For example, the receiver may be rotatable and may have the ability to travel in at least one axis. In some embodiments, the receiver can rotate in multiple axes. In some embodiments, the receiver is a rotating table. In some embodiments, the feeder is adapted to feed the ply directly onto the receiver. Optionally, the ply is delivered to the receiver by a conveyor (170) which is adapted to transport the ply away from the cutting apparatus. In other embodiments, the present device may also include an apparatus, such as a multi-axis robot (180) equipped with an end effector, adapted to pick up the ply and place it on the receiver. For example, the robot can be adapted to pick up a ply as it emerges from the cutting apparatus, or can be adapted to pick up a ply as it travels along the optional conveyor. The end effector is an apparatus designed to pick up a ply, preferably without damaging the ply, and can be - for example - one or more grippers or suctions.

In some embodiments, each ply placed on the receiver (either directly or by conveyor and/or robot) is adhered to the ply or surface below. This can be achieved by mechanical means (such as physical pressure or heat), by chemical means (such as inherent tack in the ply), or by any combination thereof. Heat may be applied, for example, through conductive, convective and/or radiative sources. In other embodiments, each ply placed on the carrier is not adhered to the ply or surface below (*i.e.,* is loose). In certain preferred embodiments, the device removes the need for consumable substrates or carriers, e.g., the near-net shape plies do not require poly sheets for support.

The present devices also include an in-line resin infuser (190), adapted to impregnate the dry tows, tapes or bundles with a resin material. As used herein, the term "in line" refers to the placement of a module (*e.g.,* the resin infuser) in physical contact with (i.e., in the same manufacturing line as) the other parts of the device. The resin infuser is typically positioned to impregnate the dry tows, tapes or bundles subsequent to the spools and before the receiver. In some embodiments, the resin infuser is positioned to impregnate the dry tows before the feeder. In other embodiments, the resin infuser is positioned to impregnate the dry tows after the feeder - for example after the cutting apparatus. As used herein, the term "resin infuser" refers to a mechanism that impregnates dry tows with a resin material, for example, a liquid or molten resin composition. Resin infusers include, but are not limited to resin baths, slot dies, printing tools, or any combinations thereof. As used herein, the term "resin material" refers to a reactive or non-reactive material that is either polymeric (*e.g.*, thermoplastic resins) or convertible into polymer (*e.g*., thermoset resins, which form a polymer upon cure). Resin materials are not particularly limited, but typically may be thermoset or thermoplastic resins. In some embodiments, the resin materials for use in connection with the present teachings are curable resins.

In some aspects, the present teachings are also directed to methods for the manufacture of an uncured, near-net shape ply. The methods include:
- providing a plurality of dry tows via a plurality of spools;
- optionally, spreading each of the dry tows;
- optionally, combining the dry tows into a plurality of tapes or bundles;
- feeding the plurality of dry tows, tapes or bundles via a plurality of feeders to a cutting apparatus, wherein each feeder carries a tow, tape or bundle and the plurality of feeders maintain the tows, tapes or bundles in a parallel arrangement;
- independently cutting each individual tow, tape or bundle to a pre-determined size in the cutting apparatus; and
- impregnating the dry tows, tapes or bundles with resin material in an in-line resin infuser,
thereby providing an uncured, near-net shape ply. Methods for manufacture of uncured, near-net shape plies make use of the devices described in more detail herein.

Typical thermoset resins include, but are not limited to epoxy resins, bismaleimide, vinyl ester resins, cyanate ester resins, urethane acrylate resins, isocyanate modified epoxy resins, phenolic resins, benzoxazines, formaldehyde condensate resins (such as with urea, melamine or phenol), polyesters, acrylics, and combinations thereof. Typical thermoplastic resins include, but are not limited to polyesters, polyamides, polyimides, polycarbonates, poly(methyl methacrylates), polyaromatics, polyesteramides, polyamideimides, polyetherimides, polyaramides, polyarylates, polyaryletherketones, polyetheretherketones, polyetherketoneketones, polyacrylates, poly(ester) carbonates, poly(methyl methacrylates/butyl acrylates), polysulphones, polyarylsulphones, polyphthalamides, copolymers thereof and combinations thereof. In some embodiments, the thermoplastic resins may also include one or more reactive end groups, such as amine or hydroxyl groups, which are reactive to epoxides or curing agents.

The resin material may also contain other additives such as curing agents, curing catalysts, initiators, co-monomers, rheology control agents, tackifiers, inorganic or organic fillers, elastomeric toughening agents, toughening core-shell particles, stabilizers, inhibitors, pigments, dyes, flame retardants, reactive diluents, solvents, soluble or particulate thermoplastics and other additives well known to those skilled in the art for modifying the properties of the resin before or after curing.

In some embodiments, the resin material is a thermoset material that possesses sufficient tack to allow handling, *e.g.,* by hand or by the device(s) described herein. The formulation and/or processing characteristics can be tuned in order to achieve properties and necessary cure level for handling. The appropriate tack will be dependent on a number of variables, including the level of impregnation and the size of the tows.

Methods and devices according to the present teachings may also include one or a number of modules, which are designed to modify the tows, tapes or bundles before cutting, or which are designed to modify or otherwise process the near-net shape ply. In some embodiments, the device of the present teachings is integrated with a system for optimizing the placement of tows, tapes or bundles in a ply and/or a system for optimizing the placement of plies in a laminate structure. Such systems can include, for example, a processor; a memory in communication with the processor, including an application interface which, when executed by the processor, is configured to actuate the feeders and cutters to provide plies of a desired shape. In other embodiments, the device also includes an in-line monitoring system, adapted to monitor the quality of the material passing through the device. For example, a system may be placed near the spools to monitor the tow dimensions. Additionally or alternatively, a system may be placed near the resin infuser to monitor the resin loading. A system may also be placed after the cutting apparatus to monitor the quality of the plies. In still other embodiments, the device includes an applicator adapted to deposit a veil on the surface of the ply. Such a veil may be desired, *e.g.,* to ensure cross-web integrity of the ply. In some embodiments, the device also includes a module adapted to alter the tack of the tow before it is cut in the cutting apparatus. In some embodiments, the device also includes a module adapted to alter the tack of the uncured ply. For example, the device may include a beta-staging module, a cooling module, and/or a module adapted to add a less tacky material (such as thermoplastic powder or a veil) to the outermost surface of the impregnated tow, tape or bundle or to the near net shape ply. In still further embodiments, the device also includes a module for mechanically forming (*e.g.,* mechanically thermoforming) one or more plies. In other words, the near-net shape plies generated using the device described herein may be used in methods for mechanically thermoforming composite parts. Such methods are described, *e.g.,* in WO 2018/146178 and can include, for example: placing one or more substantially planar near-net shape plies between two flexible diaphragms such that a pocket between the diaphragms houses the one or more plies and using a heated press tool to form the plies within the pocket into a shape and cure the resin in the plies.

## Claims

1. A device for the manufacture of uncured, near-net shape plies, the device comprising:
- a plurality of spools, each dispensing a dry tow;
- optionally, a plurality of spreaders to spread the dry tows;
- optionally, a means to combine the dry tows into a plurality of tapes or bundles;
- a plurality of feeders, each carrying a tow, tape or bundle, and adapted to maintain the tows, tapes or bundles in a parallel arrangement;
- a cutting apparatus adapted to independently cut each individual tow, tape or bundle to a pre-determined length;
- optionally, a conveyor adapted to transport the cut tows, tapes or bundles away from the cutting apparatus;
- an in-line resin infuser adapted to impregnate the dry tows, tapes or bundles with resin material; and
- a receiver for the cut tows, tapes or bundles, wherein the cut tows, tapes or bundles are impregnated and configured in the form of a near-net shape ply.

2. The device according to claim 1 wherein the cutting apparatus comprises one or more contact cutters, *e.g.,* guillotine blades, one or more non-contact cutters, or both.

3. The device according to any one of the preceding claims, wherein the resin infuser is positioned to impregnate the dry tows before the feeders.

4. The device according to any one of claims 1-2, wherein the resin infuser is positioned to impregnate the dry tows after the feeder, *e.g.,* after the cutting apparatus.

5. The device according to any one of the preceding claims, wherein the resin infuser is at least one resin bath, slot die, printing tool, resin doser, pump or a combination thereof.

6. The device according to any one of the preceding claims, wherein the feeder is adapted to feed the near-net shape ply directly onto the receiver.

7. The device according to any one of the preceding claims, wherein the receiver is adapted to receive multiple plies at various orientations in a stacked arrangement.

8. The device according to claim 7, wherein the receiver is rotatable and can travel in at least one axis

9. The device according to claim 7, wherein the receiver is a rotating table.

10. The device according to any one of claims, wherein the receiver comprises a multi-axis robot equipped with an end effector adapted to pick up the near-net shape ply.

11. The device according to any one of the preceding claims, further comprising a module adapted to modify the tows, tapes or bundles before cutting, or a module adapted to modify or otherwise process the near-net shape ply, for example wherein the module is a module adapted to alter the tack of the tow, tape or bundle before cutting or to alter the tack of the ply.

12. A method for the manufacture of an uncured, near-net shape ply, the method comprising:
- providing a plurality of dry tows via a plurality of spools;
- optionally, spreading each of the dry tows;
- optionally, combining the dry tows into a plurality of tapes or bundles;
- feeding the plurality of dry tows, tapes or bundles via a plurality of feeders to a cutting apparatus, wherein each feeder carries a tow, tape or bundle and the plurality of feeders maintain the tows, tapes or bundles in a parallel arrangement;
- independently cutting each individual tow, tape or bundle to a pre-determined length in the cutting apparatus; and
- impregnating the dry tows, tapes or bundles with resin material in an in-line resin infuser,
thereby providing an uncured, near-net shape ply.

13. The method according to claim 12 wherein the cutting apparatus comprises one or more contact cutters, e.g., guillotine blades, one or more non-contact cutters, or both.

14. The method according to any one of claims 12-13, wherein the resin infuser is positioned to impregnate the dry tows before the feeders.

15. The method according to any one of claims 12-14, wherein the resin infuser is at least one resin bath, slot die, printing tool, resin doser, pump or a combination thereof.
